# EUROPEAN PATENT APPLICATION

(11) **EP 4 826 637 A1**
(43) Date of publication of application: **21.10.2026**
(21) Application number: 25742083.6
(22) Date of filing: 14.01.2025
(51) Int. Cl.: G06Q 50/50, H04L 51/04, G06F 3/0481, G06T 13/80, G06F 40/284

(54) **ELECTRONIC DEVICE, METHOD FOR PROVIDING SPEECH BALLOON FUNCTION INCLUDING MESSAGE THEREOF, AND RECORDING MEDIUM THEREOF**

(30) Priority: 17.01.2024 KR 20240007515; 06.03.2024 KR 20240031993
(71) Applicant: Samsung Electronics Co., Ltd., Suwon-si, Gyeonggi-do 16677 (KR)
(72) Inventor: SEO, Hyojeong, Suwon-si, Gyeonggi-do 16677 (KR); KWON, Dongki, Suwon-si, Gyeonggi-do 16677 (KR); KIM, Hyunil, Suwon-si, Gyeonggi-do 16677 (KR); PARK, Sungmin, Suwon-si, Gyeonggi-do 16677 (KR); KWAK, Taewon, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2025/000820
(87) International publication number: WO 2025/155068

(57) **Abstract**

An electronic device according to an embodiment may comprise: a display; a processor; and a memory for storing instructions executable by the processor, wherein the instructions cause the electronic device to: receive text input in a message input window; transmit the input text as an input value of an artificial intelligence engine to obtain at least one first recommended emoji optimized for the text from the artificial intelligence engine; and display, on at least a portion of the display, a first message in which the obtained at least one first recommended emoji is disposed on the outer border of a speech balloon including the text.

## Description

### (Technical Field)

The disclosure relates to an electronic device, a method for providing a message-containing speech bubble function thereof, and a recording medium therefor.

### (Background Art)

An electronic device may provide messaging services such as a short messaging service (SMS) or a multimedia messaging service (MMS), which allow a user to send a message written by the user to others. Recently, electronic devices have supported messaging services based on rich communication service (RCS), which can replace legacy services such as SMS or MMS.

RCS is a data-based next-generation message standard standardized by the Global System for Mobile Communications Association (GSMA). Compared to legacy services such as SMS or MMS, RCS offers various advantages such as increased message length, providing of a read receipt function, and ease of interworking with other applications, and is thus being widely used.

Meanwhile, the messaging service of an electronic device may transmit not only text but also photos or videos. In addition, the messaging service supports not only emoticons, which express emotion through combinations of text, but also an emoji function, which is expressed by one image or multiple image frames. A user may effectively convey the user's intent or emotional state by using the emoji.

The above information may be provided as related art for the purpose of facilitating an understanding of the disclosure. No assertion or determination is made as to whether any of the foregoing may be considered prior art with respect to the present disclosure.

### (Disclosure of Invention)

### (Technical Problem)

In transmitting a message in an electronic device, the expression method may be considered to be limited, such as transmitting text or transmitting an emoji/emoticon.

Therefore, there may be a need for an expression method that can convey enjoyment and emotions to a user in various ways within a chat window providing a message service.

The subjects pursued in the disclosure are not limited to the above-mentioned subjects, and may be variously extended without departing from the idea and scope of the disclosure.

### (Solution to Problem)

An electronic device according to an embodiment may include a display, a processor, and a memory configured to store instructions executable by the processor. According to an embodiment, the instructions may cause the electronic device to receive text input into a message input window. According to an embodiment, the instructions may cause the electronic device to transfer the input text as an input value to an artificial intelligence engine and obtain at least one first recommended emoji optimized for the text. According to an embodiment, the instructions may cause the electronic device to display, on at least a portion of the display, a first message in which the at least one obtained first recommended emoji is disposed at the outline of a speech bubble including the text.

A method for providing a message speech bubble function of an electronic device according to an embodiment may include receiving a text input into a message input window. According to an embodiment, the method may include transferring the input text as an input value to an artificial intelligence engine to obtain, from the artificial intelligence engine, at least one first recommended emoji optimized for the text. According to an embodiment, the method may include displaying, on at least a portion of the display, a first message in which the at least one obtained first recommended emoji is disposed at the outline of the speech bubble including the text.

A non-transitory computer-readable medium for storing instructions according to an embodiment may include an instruction that, when executed by a processor of an electronic device, causes the electronic device to receive text input in a message input window. According to an embodiment, the computer-readable medium may include instructions that causes the electronic device to transfer the input text as an input value to an artificial intelligence engine and obtain, from the artificial intelligence engine, at least one first recommended emoji optimized for the text. According to an embodiment, the computer-readable medium may include an instruction that causes the electronic device to display, on at least a portion of the display, a first message in which the at least one obtained first recommended emoji at the outline of the speech bubble including the text.

An electronic device according to an embodiment may include a computer-readable medium on which a program for implementing a method for providing a speech bubble function including a message is recorded.

### (Advantageous Effects of Invention)

The electronic device, the method, and the recording medium according to various embodiments may automatically recommend an emoji to decorate the periphery of a speech bubble based on a sentiment and keywords indicated in a message text, based on a generative AI (e.g., generative AI), and transmit the message and a message bubble decoration effect together, thereby not only reflecting the user's emotion in the message bubble, but also providing fun.

Advantageous effects obtainable from the disclosure are not limited to the above-mentioned effects, and other effects which are not mentioned herein may be variously extended by those skilled in the art to which the disclosure pertains without departing from the idea and scope of the disclosure, based on the following description.

### (Brief Description of Drawings)

With regard to the description of the drawings, the same or like reference signa may be used to designate the same or like elements.
FIG. 1A is a block diagram illustrating an electronic device in a network environment according to various embodiments.
FIG. 1B illustrates a generative artificial intelligence (AI) system according to an embodiment.
FIGS. 2A and 2B illustrate a method for providing a message speech bubble function of an electronic device according to an embodiment.
FIG. 3 illustrates a processing method of an emoji recommendation engine according to an embodiment.
FIGS. 4A and 4B illustrate screens providing a message bubble function of an electronic device according to an embodiment.
FIGS. 5 and 6 are diagrams illustrating automatic emoji arrangement and effect application in bubble decoration according to an embodiment.
FIG. 7 illustrates screens providing a speech bubble function of an electronic device according to an embodiment.
FIG. 8 illustrates a method for providing a speech bubble function of an electronic device according to an embodiment.
FIG. 9 illustrates examples of transmitted and received messages to which a speech bubble decoration effect of an electronic device according to an embodiment has been applied.
FIG. 10 illustrates screens providing a speech bubble function of an electronic device according to an embodiment.
FIGS. 11A and 11B illustrate screens providing a speech bubble function of an electronic device according to an embodiment.

### (Mode for the Invention)

An electronic device according to an embodiment set forth herein may be one of various types of electronic devices. The electronic devices may include, for example, a portable communication device (e.g., a smartphone), a computer device, a portable multimedia device, a portable medical device, a camera, a wearable device, or a home appliance. The electronic device according to the embodiments set forth herein is not limited to the above-described devices.

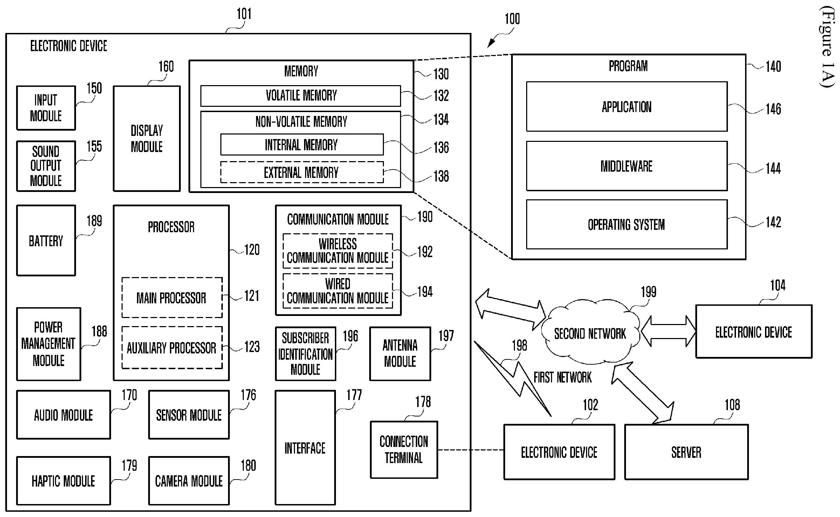

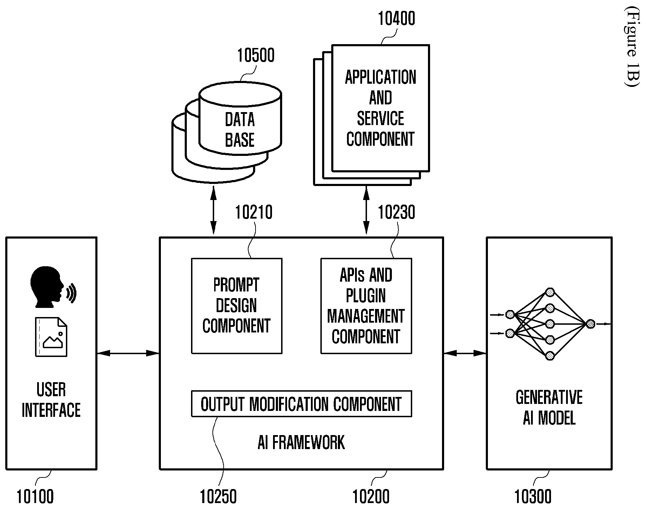

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device 101 according to an embodiment may support a generative artificial intelligence (AI) (or on-device AI) function/service. The generative AI function may refer to a technology of generating new content based on previously learned data, and generating new AI content by utilizing given input data or information. Here, the AI content may refer to content (e.g., emojis, images, videos, audio, or text) which is entirely generated (or reconstructed/edited) or partially generated (or reconstructed/edited) based on generative AI.

The electronic device 101 according to an embodiment may support a generative AI function (or AI service) in conjunction with the server 108. According to an embodiment, at least one of the electronic device 101 or the server 108 may include a configuration of a generative AI system illustrated in FIG. 1B.

For example, FIG. 1B illustrates a configuration of a generative AI system according to an embodiment. As illustrated in FIG. 1B, the generative AI system may include a user interface 10100, an AI framework 10200, a generative AI model 10300, an application and service component 10400, and a database component 10500.

The user interface (UI) (e.g., a user query/response interface) 10100 according to an embodiment may receive a user query input. The user query input may be in the form of natural language, images, and videos. The user interface 10100 may transmit not only data regarding the user query input, but also context information to the AI framework 10200. The context information may include various types of additional information at the time of user input. In addition, the user query input may also be in a form in which the above-described natural language, image, sound, and context information are mixed. In addition, the user query input may also be in the form of unnatural language that does not generate natural language, such as menu selection (e.g., a generation request or a modification request). The user interface 10100 may output the result of the generative AI system to a user. The output may be in the form of natural language or specific content, and may also be provided in the form of an action requested by the user.

The AI framework 10200 according to an embodiment may receive the user query input, and coordinate and control, based on the user query input, respective components required to perform the user's intent. The AI framework 10200 may include a prompt design component 10210, an application and plugin management component (APIs/Plugins management component) 10230, and an output modification component 10250.

A user query or action input in the user interface 10100 according to an embodiment may be transmitted to the prompt design component 10210. The prompt design component 10210 may be used to generate a prompt suitable for input into a large language model (LLM) or a large multimodal model (LMM). The prompt design component 10210 may be an AI component that uses a machine learning algorithm or a neural network to develop better prompts over time. The prompt design component 10210 may access the database component 10500 (e.g., a knowledge component) including user preference data, a prompt library, and prompt examples to generate a prompt, and transfer the generated prompt to a large language model (LLM) or a large multi-modal model (LMM).

The application and plugin management component 10230 according to an embodiment may perform a role of communicating with external information when additional information is requested while transferring a user input as an input of a generative model. The application and plugin management component 10230 may establish a channel for communication with the outside of the application and service component 10400 (e.g., AI Interface) via an application programming interface (API), and thereby access various data sources. In addition, when an action to finally perform a user query, rather than an intermediate result, should be performed in an application or a service, the application and plugin management component 10230 may request the action via the API. Information acquired from the outside may be transferred as the input of the generative model together with the user input.

The output modification component 10250 according to an embodiment may finely tune a result that is output from the generative model. For example, the output modification component 10250 may verify whether content generated through a language model (LLM) or a large multimodal model (LMM) is irrelevant, does not include biased content, or does not include harmful content. In addition, the output modification component 10250 may determine how well the content matches a result that the user wants, and if an additional process is necessary, may perform the additional process. Additionally, the output modification component 10250 may generate a hint and provide the hint to a user to prevent unwanted outputs.

The generative AI model 10300 according to an embodiment may generally refer to an artificial intelligence neural network that generates new types of data, depending on user input information. A model for generating an image may typically include a generative adversarial network (GAN) and a variational auto encoder (VAE). For example, the generative AI model may be a diffusion-based generative model using a VAE and a transformer architecture. In addition, a model for generating a language may refer to a model trained to output a statistically most appropriate output value, based on an input value. A model for generating language, among the generative AI models 10300, may be, for example, a model such as CHAT-GPT 3 or CHAT-GPT 4. As another example, large multimodal models (LMMs) may be models that can recognize various types of data inputs such as text, images, and audio, and generate corresponding new data.

The electronic device 101 according to an embodiment may generate a recommended emoji by using an AI model different from the generative AI model illustrated in FIG. 1B, and may support a speech bubble decoration function related to the recommended emoji.

According to an embodiment, the memory 130 may store instructions executable by the processor 120 or the electronic device 101. The instructions may include control commands such as arithmetic and logical operations, data transfer, and input/output, which may be processed by the processor 120.

According to an embodiment, the processor 120 may be operatively, functionally, and/or electrically connected to the display module 160 (e.g., a touch screen display) and/or the memory 130. The processor 120 may be configured to perform operations or data processing relating to control and/or communication of each component of the electronic device 101, and may be formed as one or more processors. The operations and data processing functions that may be implemented by the processor 120 on the electronic device 201 are not limited, but, in the disclosure, the processor 120 may process various operations related to a speech bubble function or a speech bubble decoration service.

The electronic device 101 according to an embodiment may be implemented to provide an AI service function by using a part of the AI system in FIG. 1B, but is not limited thereto.

The electronic device 101 according to an embodiment may provide an AI service function by using an AI model implemented in association with a recommended emoji.

An electronic device 101 according to an embodiment may include a display (e.g., the display module 160), a processor 120, and a memory 130 configured to store instructions executable by the processor 120.

According to an embodiment, the instructions may cause the electronic device 101 or the processor 120 to receive text input into the message input window. According to an embodiment, the instructions may cause the electronic device 101 or the processor 120 to determine the number of recommended emojis, based on a speech bubble width according to the number of characters of the text. According to an embodiment, the instructions may cause the electronic device 101 or the processor 120 to transfer the input text as an input value of an artificial intelligence engine and obtain at least one first recommended emoji optimized for the text. According to an embodiment, the instructions may cause the electronic device 101 or the processor 120 to display, on at least a portion of the display, a first message in which the at least one obtained first recommended emoji is disposed along the edge of the speech bubble including the text.

According to an embodiment, the instructions may cause the electronic device 101 or the processor 120 to display a first user interface (UI) screen including the message input window and a chat window on the display, display a speech bubble decoration window on at least a portion of the first UI screen, based on the text being received in the message input window, and display the first message and a message transmission item in the message decoration window.

The electronic device 101 according to an embodiment may further include a communication circuit (e.g., the communication module 190), and the instructions may cause the electronic device 101 or the processor 120 to, based on an input for selecting the message transmission item, transmit the text, including speech bubble decoration data in which the at least one first recommended emoji is disposed along the edge of the speech bubble, to a counterpart electronic device via the communication circuit, and display the first message in the chat window.

According to an embodiment, the artificial intelligence engine may include an emoji recommendation engine based on generative artificial intelligence.

According to an embodiment, the instructions may cause the electronic device 101 or the processor 120 to extract a neologism keyword from an input sentence corresponding to the text, convert the neologism keyword to an alternative word, delete at least one of profanity and a specific type of word in the input sentence, thereby obtaining filtered text, and to transfer, as an input value of the artificial intelligence engine, at least one of a first reference value for determining the appropriateness of an object emoji, a second reference value for determining the appropriateness of an emotion emoji, and the number of emoji requests determined based on the speech bubble width of the first message.

According to an embodiment, the neologism keyword, the alternative word, the profanity, and the specific type of word may be preconfigured.

According to an embodiment, the instructions may cause the electronic device 101 or the processor 120 to, as an operation of obtaining the at least one first recommended emoji, obtain at least one first emoji from the artificial intelligence engine, obtain at least one second emoji corresponding to the neologism keyword extracted from the input sentence corresponding to the text, and obtain the at least one first recommended emoji by combining the first emoji and the second emoji.

According to an embodiment, the instructions may cause the electronic device 101 or the processor 120 to, as an operation of displaying the first message on the at least portion of the display, determine, based on a score of the at least one first recommended emoji, a decoration pattern for arranging an emoji along the edge of the speech bubble, and display the at least one first recommended emoji along the edge of the speech bubble, based on the number of emojis, an emoji text size, emoji arrangement, and an emoji position defined in the determined decoration pattern.

According to an embodiment, the instructions may cause the electronic device 101 or the processor 120 to further display a refresh item in the message decoration window and, in response to a user input for selecting the refresh item, change the first reference value and then drive the artificial intelligence engine to obtain at least one second recommended emoji, and display a first message in which the first recommended emoji is replaced with the second recommended emoji along the edge of the speech bubble including the text.

In the following description of an electronic device 101 according to embodiments of the disclosure, constituent elements that are substantially the same as the configuration disclosed in FIG. 1 described above will be denoted by the same reference numerals, and redundant descriptions thereof will be omitted.

The electronic device 101 according to an embodiment may support a message/chat function that transmits a message (a chat) input into an input window to a counterpart electronic device, receives a message transmitted from the counterpart electronic device, and outputs the transmitted and received messages in a chat window in chronological order. The electronic device 101 may display a user interface (UI) including the chat window and the input window on a display in response to a message function execution (e.g., message/chat application execution). When a transmission request from a user who has input a message (e.g., a text message, a string) into the input window is detected, the electronic device 101 may transmit the message input into the input window to a counterpart and, at the same time, output the transmitted message in the chat window. Messages (e.g., text messages, strings) output in the chat window may be included in respective speech bubbles (or text bubbles, text boxes) so that the transmitted and received messages are distinguished from each other. Outputting the speech bubbles in the window may indicate that the user has exchanged messages with the counterpart.

The electronic device 101 according to an embodiment may generate a recommended emoji corresponding to text message input, based on artificial intelligence (AI) (e.g., a generative AI-based emoji recommendation engine). The electronic device 101 according to an embodiment may request an AI-based recommended emoji from a server (e.g., the server 108 in FIG. 1) and receive a recommended emoji generated by the server's generative AI from the server.

The electronic device 101 according to an embodiment may support a function of recommending emojis corresponding to a text message input into the input window, based on the AI (e.g., an emoji recommendation engine or an AI model based on generative AI). For example, the emoji recommendation engine may use a deep learning program to newly generate an emotion emoji corresponding to the input text and an emoji corresponding to a specific keyword, or to extract or select an optimal emoji corresponding to the input text from an emoji database (DB).

The electronic device 101 according to an embodiment may support a function of recommending a speech bubble decoration effect suitable for the message to a user by using the recommended emojis as visual objects (or decoration objects) that decorate the surrounding or edge (outline) of a speech bubble.

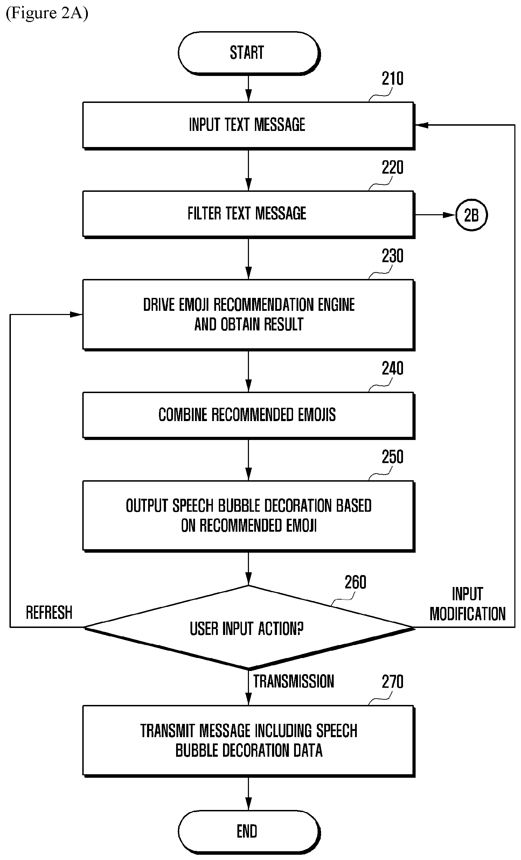

According to an embodiment, embodiments to be described with reference to FIGS. 2A to 11B may each operate independently as one embodiment.

According to an embodiment, at least two of the embodiments to be described with reference to FIGS. 2A to 11B may be operated in combination.

According to an embodiment, when at least two embodiments are operated in combination, at least some components and/or at least some operations included in each embodiment may be omitted.

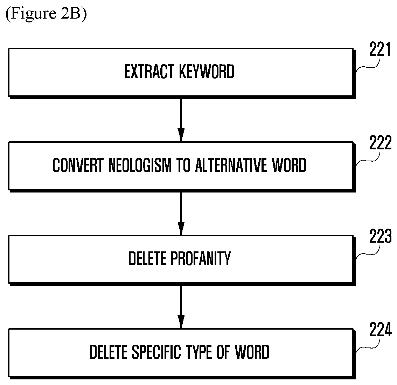

FIGS. 2A and 2B illustrate a method for providing a message bubble function of an electronic device according to an embodiment.

The operations in the following embodiments may be performed in sequence, but are not necessarily performed in sequence. For example, the order of the operations may be changed, and at least two operations may be performed in parallel.

Referring to FIGS. 2A and 2B, a processor 120 of an electronic device 101 (e.g., a transmission-side electronic device) according to an embodiment may receive a text message input (or a string input) in operation 210.

For example, the processor 120 may display a user interface (UI) for transmitting and receiving a message, based on execution of a message or chat application. The UI may include a chat window, an input window, and a keypad. The processor 120 may output text corresponding to characters (e.g., character/letter), which are input using the keypad, in real time in the input window.

According to an embodiment, the processor 120 may display a speech bubble decoration item (e.g., a menu or an icon) on a display, based on the text (or string) being input into the input window.

In operation 220, the processor 120 may perform filtering on the input text message (e.g., an input sentence or string) in order to provide the same as input data for an emoji recommendation engine.

For example, the filtering (or text message filtering) may perform, as illustrated in FIG. 2B, at least one of a keyword extraction operation, an operation of converting a neologism into an alternative word, an operation of deleting profanity, and/or an operation of deleting a specific type of word.

When the filtering operations are specifically described, as illustrated in FIG. 2B, in operation 221, the processor 120 may determine whether there is a predesignated keyword (e.g., a neologism keyword), and may extract the keyword. Here, a neologism (or a vogue word) may refer to a word/term, among newly created words/terms, which is not recognized as a standard word/term.

For example, keywords (e.g., neologism keywords) are exemplarily described in Table 1 below, but the disclosure is not limited thereto, and the keywords may be updated and/or a new keyword may be registered (or designated) depending on a user environment.

**[Table 1]**

| Type | Keyword | Alternative word |
|---|---|---|
| Abbreviation | 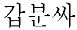 (Gap-bun-ssa) (Things got awkward) | 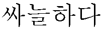 (Awkward) |
| | 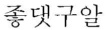 (Jot-daet-gu-al) (Like, comment, subscribe, and turn on notifications) | 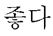 (Like), 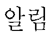 (Notification) |
| Derivative | 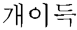 (Gae-ideuk) (Huge gain) | 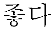 (Good), 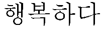 (Happy) |
| | 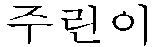 (Gae-ideuk) (Stock | 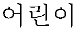 (Beginner), |
| | market newbie) | 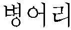 (Novice) |
| Compound word | 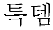 (Teuk-tem) (Special item) | 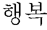 (Happiness), 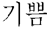 (Jov) |
| | 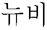 (Newbie) | 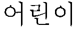 (Beginner), 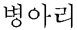 (Novice) |
| | 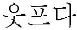 (Ut-peu-da) (Funny but sad) | 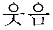 (Laughter), 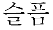 (Sadness) |
| Morphological neologism | 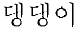 (Daeng-daeng-i) (Dog) | 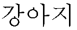 (Dog), 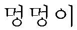 (Doggie) |
| | 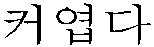 (Keo-yeo-wo) (Cute) | 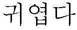 (Cute), 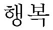 (Happiness) |
| Others | 1 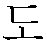 (1-do) (Not at all) | 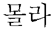 (Don't know), 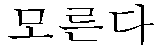 (Do not know) |
| | 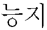 (Neung-ji) (Lack of intelligence) | 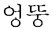 (Goofiness) |
| Loanword | TMI (too much information) | 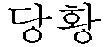 (Flustered), 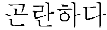 (Uncomfortable) |
| | TMT (too much talker) | 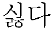 (Annoyed), 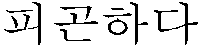 (Fatigued) |

In operation 222, the processor 120 may convert a neologism keyword to an alternative word. For example, when the text (or word, string) " 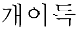 " (Gae-ideuk) (huge gain) is input into the message input window, the processor 120 may convert the text " 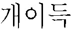 " (Gae-ideuk) (huge gain) into the word " 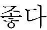 " (good) or " 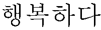 " (happy). In operation 223, the processor 120 may delete a word (or string) classified as profanity.

For example, profanity, violent words, or specific types of words may be predesignated (or preconfigured, or prestored).

When text or a word classified as specified profanity exists, the processor 120 may delete the word.

In operation 224, the processor 120 may delete a specific type of word (or string).

For example, the processor 120 may classify words corresponding to sensitive categories such as termination, race, gender, hatred, aversion, killing, suicide, and/or drugs, identify words that may be included in the sensitive category, and delete the identified words.

The processor 120 may obtain a filtered text sentence (or a filtered text message) by performing operations 221 to 224.

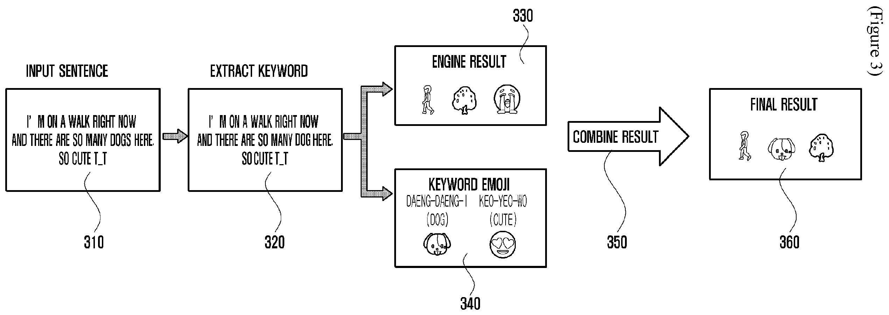

In operation 230, the processor 120 may drive an emoji recommendation engine, based on the filtered text sentence, and acquire a result. The driving of the emoji recommendation engine and the result acquisition will be described in detail with reference to FIG. 3.

The processor 120 may acquire recommended emojis, based on the result of driving the emoji recommendation engine. For example, the emoji recommendation engine may output up to three emojis and/or emoji scores as output data, but the disclosure is not limited thereto.

Although not illustrated in the drawings, when a keyword emoji (or a default emoji, a model emoji) corresponding to a keyword exists, the processor 120 may acquire the keyword emoji as a recommended emoji, independently of the emoji recommendation engine operation. The keyword emoji (or default emoji, model emoji) may refer to an emoji that is mapped to a predesignated keyword. For example, a dog emoji may be mapped to the keyword " 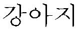 " (dog) or " 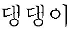 " (Daeng-daeng-i) (dog).

In operation 240, the processor 120 may combine the recommended emojis.

For example, based on the recommended emojis and/or keyword emojis, the processor 120 may select optimal recommended emojis (or final emojis) corresponding to the input text message, and determine a speech bubble decoration pattern. Operations for combining and/or selecting emojis will be described in detail with reference to FIG. 3.

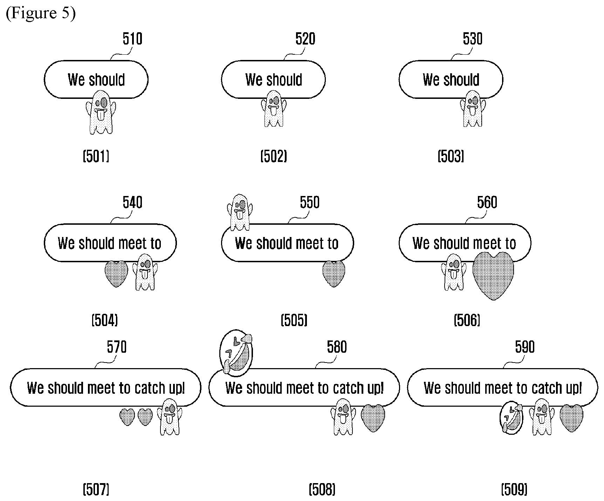

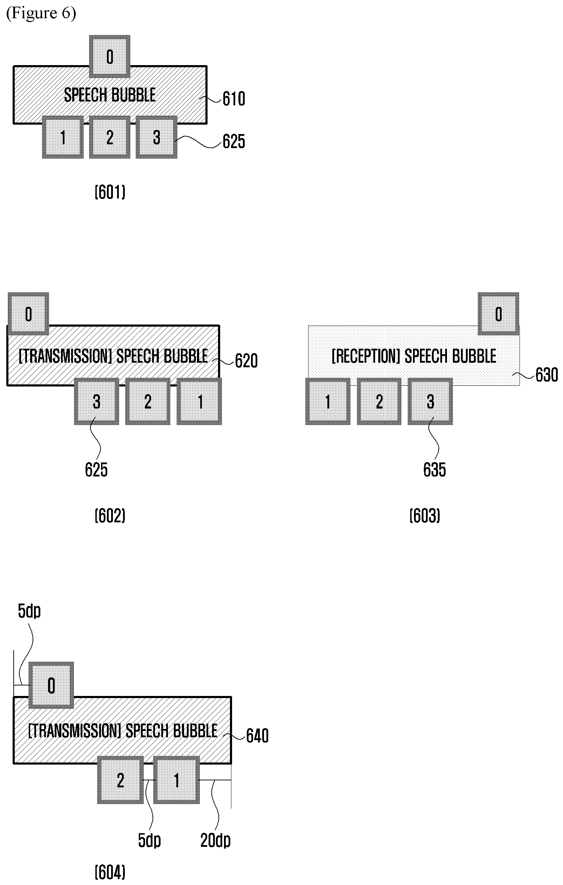

According to an embodiment, the processor 120 may select a decoration pattern based on the horizontal width of a speech bubble corresponding to the text message, automatically arrange recommended images, and apply an animation effect. Hereinafter, the decoration pattern and the animation effect will be described with reference to FIGS. 5 and 6.

In operation 250, the processor 120 may output a speech bubble decoration effect on the display, based on the recommended emojis.

For example, the processor 120 may display a speech bubble decoration window on at least a portion of the display, based on an input for selecting a speech bubble decoration item in the input window. The processor 120 may display, in the speech bubble decoration window, a visual effect in which a recommended emoji is applied to the surrounding or the edge of a speech bubble including the text message input in the input window. The user may identify a speech bubble decoration effect corresponding to the text message through the speech bubble decoration window.

In operation 260, the processor 120 may determine a user request operation according to a user input.

For example, the speech bubble decoration window may include a transmission item, a refresh item, and a cancel item.

When a user input action is an input requesting input modification (e.g., modifying text characters input in the input window) (e.g., input modification in operation 260), the processor 120 may return to operation 210 and then repeat operations 220 to 260, based on a newly input text (or character, string of characters) in the message window.

When the user input action is an input selecting a refresh item (e.g., refresh in operation 260), the processor 120 may return to operation 230 to receive a new recommended emoji, and may repeat operations 240 to 260.

In operation 270, when the user input is an input selecting a message transmission item (e.g., transmission in operation 260), the processor 120 may transmit a message (e.g., a text message) including speech bubble decoration data to a counterpart electronic device.

FIG. 3 is a diagram illustrating a processing method of an emoji recommendation engine according to an embodiment.

Referring to FIG. 3, in operation 310, the processor 120 of the electronic device 101 may identify an input sentence (or a text message) input via an input window (e.g., a message input window).

In operation 320, the processor 120 may extract a keyword (e.g., a neologism keyword) from the input sentence.

For example, as described in FIG. 2B, the keyword may extract a keyword included in input text, based on predefined/predesignated keyword information. For example, when the user may input the sentence " 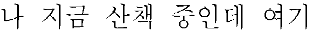 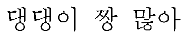 . 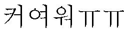 " (I'm on a walk right now and there are so many dogs here. So cute T_T) into the message input window, the processor 120 may extract " 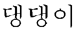 " (Daeng-daeng-i) (dog) and " 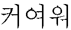 " (Keo-yeo-wo) (cute) as keywords.

In operation 330, the processor 120 may drive an emoji recommendation engine to output a result.

According to an embodiment, the processor 120 may transfer, as input data of the emoji recommendation engine, filtered text data (e.g., a filtered input sentence, a filtered string) based on the filtering operations (e.g., converting a neologism keyword (e.g., " 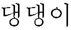 " (Daeng-daeng-i) or " 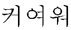 " (Keo-yeo-wo)) with an alternative word (e.g., " 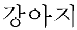 " (dog) or " 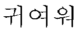 " (cute)) or deleting profanity/a specific type of word) illustrated in FIG. 2B.

According to an embodiment, the emoji recommendation engine may be driven based on generative AI, and may use a deep learning program to newly generate an emotion emoji corresponding to a text message and an emoji corresponding to a specific keyword with respect to an input text, or to extract or select a recommended emoji from an emoji database (DB).

According to an embodiment, the processor 120 may transfer filtered text data, at least one of a first reference value for determining the appropriateness of an object emoji, a second reference value for determining the appropriateness of an emotion emoji, and the number of emoji requests determined based on the width of a speech bubble of a message, as an input value (or input data) of the emoji recommendation engine. The first reference value and the second reference value may refer to reference values for an AI model (e.g., the emoji recommendation engine) to derive a result. For example, in relation to the emoji recommendation engine, the first reference value for the object emoji may be set to 0.73, and the second reference value for the emotion emoji may be initially set to 0.77, but the disclosure is not limited thereto.

According to an embodiment, the emoji recommendation engine may calculate emoji appropriateness scores for all emojis in response to the input text (e.g., the filtered input sentence), and determine, as a candidate group, emojis that have respective scores higher than a first reference value or a second reference value. The emoji recommendation engine may select (e.g., randomly or in descending order of score) emojis corresponding to the number of emoji requests from the candidate group and output the selected emojis as recommended emojis. The number of recommended emojis output by the emoji recommendation engine may be up to three, but is not limited thereto.

In operation 340, independently of or in parallel to operation 330, the processor 120 may acquire a keyword emoji (or a default emoji or a model emoji) corresponding to the extracted keyword as a recommended emoji.

For example, when a keyword emoji mapped to the extracted keyword exists, the processor 120 may acquire the keyword emoji.

According to an embodiment, the keyword emoji may be stored in an emoji database (DB). The processor 120 may acquire the keyword emoji from the emoji DB.

According to an embodiment, in the process of acquiring the keyword emoji, the processor 120 may perform the keyword extraction operation, the operation of converting a neologism to an alternative word, the operation of deleting profanity, and/or a filtering process of deleting a specific type of word, illustrated in FIG. 2 B.

In operation 350, the processor 120 may combine emojis, based on at least one of the emoji recommendation engine result and/or the keyword emoji, as described in FIGS. 2A and 2B.

In operation 360, the processor 120 may select optimized final emojis corresponding to the input sentence, based on the combined emojis. The term "final emojis" are used merely for convenience in description and may mean some of the recommended emojis.

According to an embodiment, the processor 120 may select final emojis by combining, according to the following rules, at least one of the three emojis and/or N keyword emojis (e.g., N is a natural number) acquired from the emoji recommendation engine, but the disclosure is not limited thereto.

For example, rule 1 provides that ,when an emoji recommended as the emoji recommendation engine result overlaps a keyword emoji, the emojis may be preferentially included in the final emojis. Rule 2 provides that, when the emoji recommended as the emoji recommendation engine result and the keyword emoji are opposing emotion emojis (e.g., a smiling face emoji and a crying face emoji), an emoji corresponding to the keyword emoji may be deleted. Rule 3 provides that, when there are three emotion emojis in the emoji recommendation engine result and one object emoji is included in the keyword emoji, the lowest-scoring emotion emoji among the emotion emojis may be excluded from the final emojis, and the object emoji may be included in the final emojis. Conversely, when the emoji recommendation engine result shows that there are three object emojis and one emotion emoji is included in the keyword emoji, the lowest-scoring emoji among the object emojis may be excluded from the final emojis, and the emotion emoji may be included in the final emojis. Meanwhile, the score of the keyword emoji may be designated as 0.88.

The processor 120 may apply a speech bubble decoration effect, based on the final emojis, and output (or display) the effect in a speech bubble decoration window.

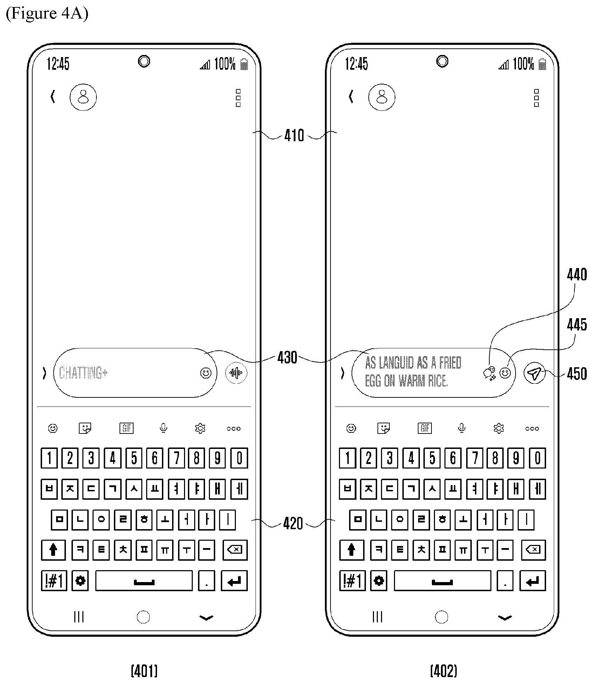

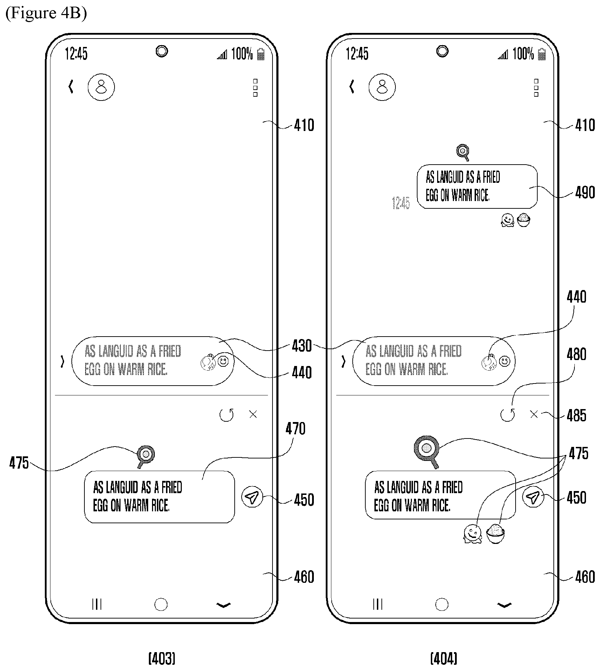

FIGS. 4A and 4B illustrate screens for providing a message bubble function of an electronic device according to an embodiment.

Referring to FIGS. 4A and 4B, as illustrated in <401>, the electronic device 101 may display, on a display, a first user interface (UI) screen including a chat window 410, a keypad 420, and an input window 430. A user may input text characters through the keypad 420, and the input text characters may be displayed in the input window 430 in real time.

As illustrated in <402>, when text characters are input into the input window 430, the electronic device 101 may display a second UI screen for calling (or displaying) a speech bubble decoration item 440 in the input window 430. In the second UI screen, an emoticon item 445 may refer to a menu for calling an emoji or emoticon list.

According to an embodiment, when the number of text characters input in the input window 430 exceeds a specified number, the electronic device 101 may display the second UI screen for calling (or displaying) the speech bubble decoration item 440 in the input window 430.

According to an embodiment, the electronic device 101 may also be configured to display the speech bubble decoration item 440 when displaying the first UI screen illustrated in <401>, regardless of text input. For example, when the user selects a transmission item 450, the electronic device 101 may transmit a text message input into the input window 430 to a counterpart electronic device and, at the same time, display a speech bubble (not illustrated) including the input text message in the chat window 410.

As illustrated in <403>, when the user inputs a text message into the input window 430 and then selects the speech bubble decoration item 440, the electronic device 101 may display a third UI screen for switching the keypad 420 to a speech bubble decoration window 460. The transmission item 450 may disappear from the input window 430 and be displayed in the speech bubble decoration window 460.

The electronic device 101 may display a speech bubble decoration effect of a text message 470 input into the input window 430 in the speech bubble decoration window 460, based on the recommended emoji (or final emoji) illustrated in FIGS. 2A, 2B, and 3.

Meanwhile, when an animation effect is applied to the recommended emojis 475, the recommended emojis may be sequentially displayed with the animation effect. For example, <403> may be an example screen illustrating a state in which a first recommended emoji 475 is output with the animation effect, and <404> may be an example screen illustrating a state in which all recommended emojis 475 are output with the speech bubble decoration effect.

As illustrated in <404>, when the user checks the speech bubble decoration effect through the speech bubble decoration window 460 and selects the transmission item 450, the text message 470 including speech bubble decoration data may be transmitted to the counterpart electronic device, and a message 490 having the speech bubble decoration effect applied thereto may be displayed in the chat window 410.

For example, the text message 470 including the speech bubble decoration data (e.g., a bubble decorate value) may be a message in which the wording " has been decorated with [Emoji]." is additionally included in a text sentence (e.g., "as languid as a fried egg on warm rice") included in the input window 430. The speech bubble decoration data (e.g., the bubble decorate value) is information in which the speech bubble decoration data is stored in a JSON format, and the JSON format may be defined as follows.

### <Example>

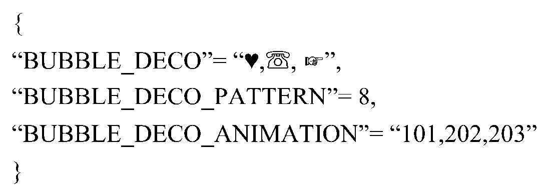

Here, BUBBLE_DECO may refer to a string in which the text data of three emojis i applied to a speech bubble are separated by ",". BUBBLE_DECO_PATTERN may refer to a numeric number of an emoji expression pattern (or decoration pattern) applied to the speech bubble. BUBBLE_DECO_ANIMATION may refer to animation effect information to be played, and a value may be generated by expressing pattern A as 100 and pattern B as 200 and adding an animation number.

According to an embodiment, the electronic device 101 may re-drive the emoji recommendation engine, based on a user input in which the user selects the refresh item 480, and re-display a speech bubble decoration effect based on a new recommended emoji in the message window 460.

According to an embodiment, the electronic device 101 may, each time the refresh item 480 is pressed, lower reference values (e.g., the first reference value and the second reference value described with reference to FIG. 3), which are transferred as input values of the emoji recommendation engine, by a predetermined value (e.g., 0.03) and transfer the lowered reference values, thereby receive newly recommended emojis. For example, when a first reference value for an object emoji is initially set to 0.73 and a second reference value for an emotion emoji is set to 0.77, the first reference value may be transferred to the emoji recommendation engine as 0.70 and the second reference value may be transferred to the emoji recommendation engine as 0.74 by the selection of the refresh item 480.

According to an embodiment, the electronic device 101 may cancel the speech bubble decoration effect, based on a user input selecting the cancel item 485, and stop the display of the speech bubble decoration window 460.

According to an embodiment, when the input window 430 is selected to modify the input text characters, the electronic device 101 may remove the speech bubble decoration window 460 and call and display the keypad 430 again.

FIGS. 5 and 6 are diagrams illustrating automatic emoji arrangement and effect application in speech bubble decoration according to an embodiment.

Referring to FIGS. 5 and 6, according to an embodiment, an electronic device 101 may select decoration patterns (or decoration templates) according to the horizontal width of a speech bubble corresponding to a text message, and may automatically arrange recommended images and apply an animation effect.

According to an embodiment, as for decoration patterns (or decoration templates, hereinafter also referred to as "patterns"), for example, nine decoration patterns may be defined as illustrated in FIG. 5, but this is merely an example and the disclosure is not limited thereto.

The decoration patterns (or decoration templates) are distinguished according to the width of a speech bubble, and each decoration pattern may have a defined number of emoji expressions, emoji text size, emoji arrangement information, and emoji position information. The definition of each decoration pattern may be as shown in Table 2 below.

**[Table 2]**

| Pattern index | Number of emojis | Emoji text size | Emoji arrangement | Emoji position (dp) |
|---|---|---|---|---|
| 1 | 1 | [46] | [1] | [20] |
| 2 | 1 | [31] | [1] | [33] |
| 3 | 1 | [31] | [1] | [5] |
| 4 | 2 | [31,31] | [1,2] | [9,5] |
| 5 | 2 | [31,31] | [0,1] | [3,0] |
| 6 | 2 | [48,31] | [1,2] | [16,2] |
| 7 | 3 | [37,18,18] | [1,2,3] | [15,5,2] |
| 8 | 3 | [47,31,31] | [0,1,2] | [5,20,5] |
| 9 | 3 | [31,31,31] | [1,2,3] | [19,5,5] |

With regard to image arrangement information and emoji position information, referring to FIG. 6, as illustrated in <601>, there may be arrangement coordinates 625 on the upper and lower ends of a speech bubble 610. For example, a coordinate "0" may exist at the upper end of the speech bubble 610, and coordinates "1," "2," and "3" may exist at the lower end of the speech bubble. In this case, a transmission speech bubble 620 illustrated in <602> and a reception speech bubble 630 illustrated in <603> are represented in a horizontally mirrored form, and thus the coordinate "0" may be shifted to the illustrated right and left boundaries, respectively. In the case of the coordinates "1", "2", and "3" at the lower end of the speech bubble, the reception speech bubble 623 may have arrangement coordinates 635 of [1, 2, 3], and the transmission speech bubble 620 may have the arrangement coordinates 625 of [3, 2, 1]. With regard to the emoji position information, as illustrated in <604>, taking pattern 8 as an example, the emoji position may refer to a distance from the boundary of a speech bubble or from a neighboring emoji, and when the emoji arrangement coordinates are [0, 1, 2], emoji positions corresponding to distances of [5, 20, 5] may be identified.

When examining speech bubbles in which emojis (e.g., recommended emojis or final emojis) are automatically arranged by the decoration patterns defined based on Table 1, the electronic device 101 may divide speech bubbles corresponding to text messages input into an input window into three ranges according to the speech bubble width, and select one of 9 patterns according to the speech bubble width (e.g., horizontal width). For example, when the width of a speech bubble is less than 102dp, the speech bubble may be represented as a speech bubble 510 of pattern 1 illustrated in <501>, a speech bubble 520 of pattern 2 illustrated in <502>, or a speech bubble 530 of pattern 3 illustrated in <503>. When the width of a speech bubble is between 102dp and 155dp, the speech bubble may be represented as a speech bubble 540 of pattern 4 illustrated in <504>, a speech bubble 550 of pattern 5 illustrated in <505>, or a speech bubble 560 of pattern 6 illustrated in <506>. When the width of a speech bubble is greater than 155dp, the speech bubble may be represented as a speech bubble 570 of pattern 7 illustrated in <507>, a speech bubble 580 of pattern 8 illustrated in <508>, or a speech bubble 590 of pattern 9 illustrated in <509>.

According to an embodiment, the electronic device 101 may also acquire scores of recommended emojis as output values of an emoji recommendation engine, and as shown in Table 3 below, calculate an average score of the recommended emojis, and select decoration patterns in which the emojis are represented, based on the average score range as shown in Table 4 below.

**[Table 3]**

| Emoji score | Score |
|---|---|
| > 0.9 | 3 |
| <= 0.9, > 0.8 | 2 |
| <=0.8, > 0.7 | 1 |

According to an embodiment, since the higher the average score of the recommended emojis, the closer the emojis are to the "optimized emojis," the electronic device 101 may select (or determine) the pattern number of a pattern to be represented, based on Table 4, according to the range (e.g., tier) of the average score of the recommended emojis.

**[Table 4]**

| Tier | Reference score | Pattern |
|---|---|---|
| 1 | >= 2.3 | 1,6,8 |
| 2 | >=1.5 | 2,5,9 |
| 3 | <1.5 | 3,4,7 |

For example, even when speech bubbles have the same width, a total area/size in which emojis are represented may vary depending on the pattern. For example, when examining patterns [7, 8, 9] in which three emojis are displayed, it can be seen that the emojis in pattern 8 illustrated in <508> are the largest and are spread out over the largest area, and the emojis in pattern 7 illustrated in <507> are represented in the smallest size. According to an embodiment, the electronic device 101 may apply an animation effect to emojis applied to speech bubble decoration. For example, when recommended emojis are initially displayed (or output or appear) in a speech bubble decoration window or a message to which a speech bubble effect has been applied is first displayed in a chat window (e.g., a reception chat window or a transmission chat window), the electronic device 101 may apply an animation effect to the emojis.

According to an embodiment, the electronic device 101 may determine, based on Table 5, an animation to be applied to an emoji according to the size of the text of an emoji.

**[Table 5]**

| Type | A | B |
|---|---|---|
| Condition | >= 37dp | <37dp |
| | bounce | bounce |
| Animation | rotate | rotate |
| | | position |
| | | scale |

For example, when the size of an emoji (or the text size) is greater than 37dp, one of two A animations is randomly played, and when the size of an emoji is less than 37dp, one of four B animations is randomly played. Animation effects of emojis may be selected so as not to overlap each other. According to an embodiment, the electronic device 101 may select, based on Table 6, an animation to be applied to an emoji based on a score of an emoji obtained from an emoji recommendation engine.

**[Table 6]**

| Emoji score | Animation |
|---|---|
| >= 0.9 | [1]bounce |
| <0.9, >= 0.8 | [2]rotate |
| <0.8m >= 0.7 | [3]position |

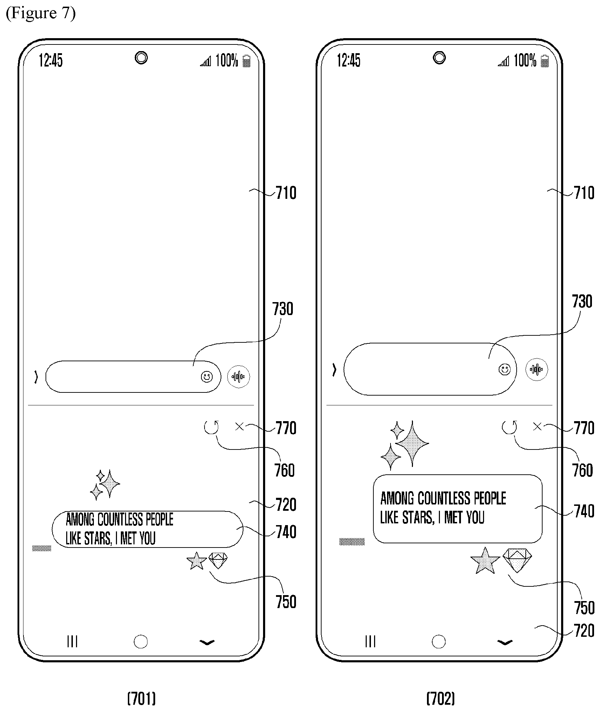

As animation number decrease, a more dynamic effect may be provided, and as the emoji score (e.g., the appropriateness score described in FIG. 3) transferred from the emoji recommendation engine increases, a more dynamic animation may be executed. When a bounce effect is first applied to one of the applied emojis in a speech bubble, a next-numbered animation effect may be applied to another emoji. FIG. 7 illustrates screens for providing a speech bubble function of an electronic device according to an embodiment.

Referring to FIG. 7, according to an embodiment, even when the size of a text message, the screen scaling, the default font size, the resolution, or the line break of a speech bubble is changed in the electronic device 101, the decoration pattern of the speech bubble and the position of an emoji may not be changed.

For example, <701> illustrates a message UI screen of the electronic device 101 with a font scale of 82%, and <702> illustrates a message UI screen of the electronic device 101 with a font scale of 171%. The message UI screen may include a chat window 710, a speech bubble decoration window 720, and an input window 730. The speech bubble decoration window 720 may include a refresh item 760 and a cancel item 770, and although not illustrated in the drawing, may further include a transmission item (not illustrated).

A message 740 included in a speech bubble () to which an emoji 750 is applied may be represented in one line as illustrated in <701> and in two lines as illustrated in <702>, depending on a font scale. However, with respect to the arrangement and position of the emoji, arrangement coordinates are determined based on the width (e.g., the horizontal width) of the speech bubble, and therefore, it may be confirmed that only an overall scale is changed, while the emoji arrangement position and a pattern remain unchanged.

With respect to the decoration pattern described in the disclosure, the decoration pattern of the speech bubble and the position of the emoji may not be changed even when a display structure is changed, such as in a rollable device, or when a screen width is changed, such as in a landscape mode.

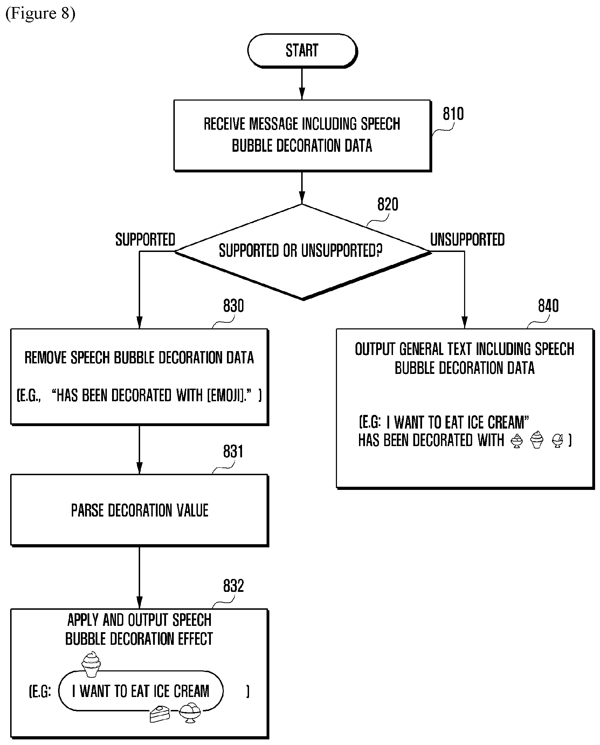

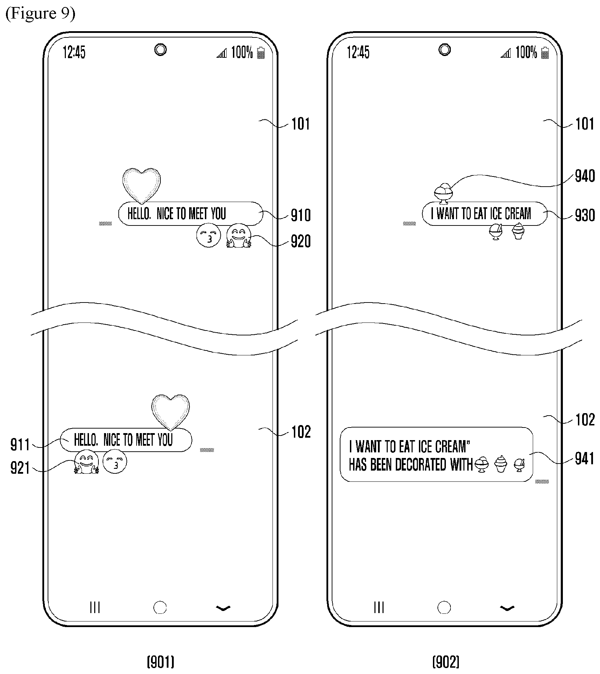

FIG. 8 illustrates a method for providing a speech bubble function of an electronic device according to an embodiment, and FIG. 9 illustrates examples of transmitted and received messages to which a speech bubble decoration effect of an electronic device according to an embodiment has been applied.

Referring to FIG. 8, in operation 810, a processor 120 of an electronic device 101 (e.g., a reception-side electronic device) according to an embodiment may receive a message including speech bubble decoration data.

In operation 820, the processor 120 may determine whether decoding (or data processing) of the speech bubble decoration data is supported.

In operation 830, when the electronic device is capable of supporting decoding of the speech bubble decoration data (e.g., support in operation 820), the processor 120 may remove the speech bubble decoration data (e.g., "has been decorated with [Emoji].") to identify the original text message.

In operation 831, the processor 120 may parse the speech bubble decoration data (e.g., BubbleDecorateValue). The processor 120 may acquire speech bubble decoration emoji, decoration pattern, and/or animation effect information. For example, the processor 120 may parse the BubbleDecorateValue as JSON and extract at least one of a speech bubble decoration emoji, a decoration pattern, and/or an animation effect value. For example, the processor 120 may identify pattern information to be arranged by using a Bubble_Deco_PATTERN value, and may identify emoji text by dividing the Bubble_Deco_PATTERN value by a "," delimiter. Alternatively, when BUBBLE_DECO_ANIMATION is included, the processor 120 may identify, based on a BUBBLE_DECO_ANIMATION value, an animation effect to be applied to an emoji.

In operation 832, the processor 120 may output, to a chat window, a message with a speech bubble decoration effect applied, based on the parsed value. For example, the message to which the speech bubble decoration effect has been applied may have a message form as in an example of operation 832.

According to an embodiment, a speech bubble decoration pattern of the reception-side electronic device may be displayed in a left-right mirrored arrangement of a speech bubble decoration pattern of a transmission-side electronic device. For example, <901> in FIG. 9 may be a chat window of the transmission-side electronic device 101 and a chat window of a reception-side electronic device 102. The transmission-side electronic device 101 may transmit a message 910, "Hello. Nice to meet you," including a speech bubble decoration emoji 920. When the reception-side electronic device 102 supports decoding of the speech bubble decoration data, the message may be displayed in a chat window as a message 911 to which a speech bubble decoration emoji 921 with a left-right mirrored pattern is applied, as illustrated in <901>.

In operation 840, when the electronic device 102 does not support decoding of the speech bubble decoration data (e.g., not supported in operation 820), the processor 120 may output a general text message including speech bubble decoration information. The general text message may be a sentence in which the wording "...has been decorated with [Emoji]" is added to the original message. For example, the general text message may have a message form as in an example of operation 840.

For example, as illustrated in <902>, the transmission-side electronic device 101 may transmit a message 930, "I want to eat ice cream", including a speech bubble decoration emoji 940. However, when the reception-side electronic device 102 does not support decoding of speech bubble decoration data, a decoration value may be ignored, and a text message bubble 941, such as ""I want to eat ice cream" has been decorated with an emoji," may be displayed in the chat window, as illustrated in <902>.

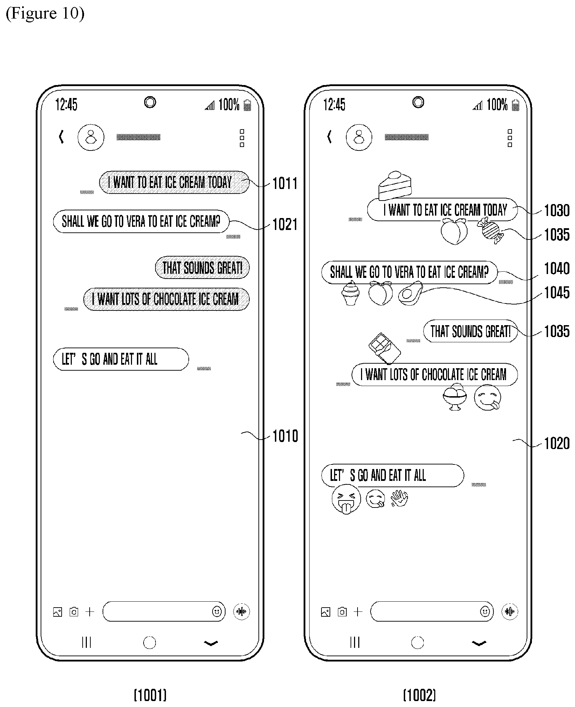

FIG. 10 illustrates screens for providing a speech bubble function of an electronic device according to an embodiment.

Referring to FIG. 10, as illustrated in <1001>, in a message UI 1010 according to a comparative embodiment (or a conventional example), speech bubble messages 1011 and 1021 including text message may be displayed in a chat window. 1011 may be a transmission-side message, and 1021 may be a reception-side message.

As illustrated in <1002>, in a message UI 1020 to which a speech bubble decoration effect has been applied according to the disclosure, a first message 1030 transmitted by the electronic device may be a message to which a speech bubble decoration effect 1035 corresponding to a text message "I want to eat ice cream today" is applied, and a second message 1040 may be a message to which a speech bubble decoration effect 1045 corresponding to a text message "Shall we go to Vera to eat ice cream?" is applied. A third message 1035 may be a message to which no speech bubble decoration effect is applied.

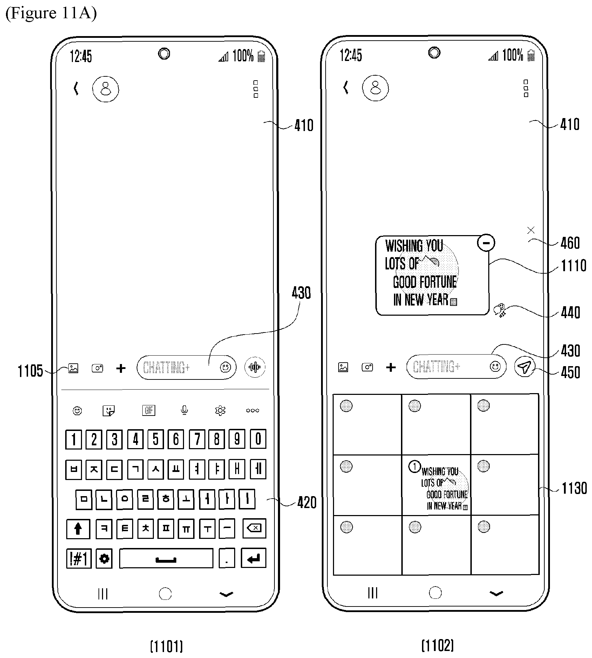

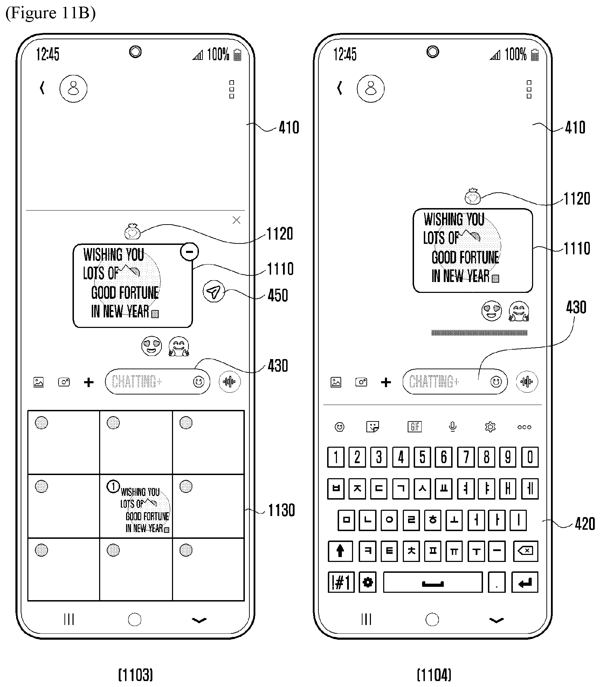

FIGS. 11A and 11B illustrate screens for providing a speech bubble function of an electronic device according to an embodiment.

Referring to FIGS. 11A and 11B, an electronic device 101 according to an embodiment may support a speech bubble decoration function to a message including an image. For example, when a single image is transmitted in an MMS message or when an MMS including only a single text is transmitted, the electronic device may support a speech bubble decoration function.

For example, as illustrated in <1101>, the electronic device 101 may display, on the display, a first user interface (UI) screen including a chat window 410, a keypad 420, and an input window 430. The electronic device 101 may receive a user input for transmitting an image, for example, an input for selecting a gallery icon 1105.

As illustrated in <1102>, the electronic device 101 may display a second UI screen for switching the keypad 420 to a gallery list screen 1130, based on an input for selecting a gallery icon 1105. The gallery list screen may display thumbnails corresponding to images stored in the electronic device 101. The user may select a thumbnail of an image to be transmitted as a message from the gallery list screen 1130.

The electronic device 101 may switch to and display a third UI screen for displaying a speech bubble decoration window 460 in one region of the chat window 410, based on a user input for selecting at least one image 1110. The speech bubble decoration window 460 illustrated in <1102> may include a thumbnail of the image 1110 to be transmitted as a message and a speech bubble decoration item 440.

As illustrated in <1103>, the electronic device 101 may, based on a user input for selecting the speech bubble decoration item 440, switch to and display the speech bubble decoration window 460 for displaying a speech bubble decorating effect 1120 of the message including the image 1110, based on a recommended emoji. In the case of the screen of <1103>, a transmission item 450 may disappear from the input window 430 and the transmission item 450 may be displayed in the speech bubble decoration window 460.

For example, the electronic device 101 may apply the speech bubble decoration effect 1120 to the message including the image 1110, based on the recommended emoji (or the final emoji) described with reference to FIGS. 2A/2B and 3. The electronic device 101 may perform text recognition (e.g., "Wishing you lots of good fortune in the New Year") on the image 1110 selected by the user input in various ways (e.g., using OCR technology on the image 1110), thereby extracting a keyword such as metadata or tag information related to the image 1110. The electronic device 101 may obtain a recommended emoji 1120 (e.g., a good fortune bag emoji and two smiling emojis) for the extracted keyword (e.g., good fortune) on a result obtained by driving an emoji recommendation engine and/or a combination of keyword emojis mapped to the extracted keyword, as described with reference to FIGS. 2A/2B and 3. The electronic device 101 may select a decoration pattern and automatically arrange recommended emojis according to the width of the message including the image 1110, thereby applying the speech bubble decoration effect 1120 to the message including the image 1110.

As illustrated in <1104>, the electronic device 101 may, based on a user input for selecting the transmission item 450, transmit a message including speech bubble decoration data to a counterpart electronic device, and switch to and display a fourth UI screen for displaying a message, to which the speech bubble decoration effect 1120 is applied, on the chat window 410.

According to the disclosure, even when a user inputs only a text message, emojis for decorating the surrounding of a speech bubble may be automatically recommended and automatically arranged and/or an animation effect may be applied thereto, thereby not only providing user convenience but also enhancing fun and individuality.

It should be appreciated that various embodiments of the present disclosure and the terms used therein are not intended to limit the technological features set forth herein to particular embodiments and include various changes, equivalents, or replacements for a corresponding embodiment. In relation to the description of the drawings, similar reference numerals may be used for similar or related components. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". The module may be an integrally configured component or a minimum unit or a portion of the component, which performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). If distributed online, at least part of the computer program product may be temporarily stored or produced in a machine-readable storage medium such as a manufacturer's server, a server of an application store, or the memory of a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a processor; and
a memory configured to store instructions executable by the processor,
wherein the instructions cause the electronic device to:
receive text input into a message input window;
transfer the input text as an input value of an artificial intelligence engine to obtain, from the artificial intelligence engine, at least one first recommended emoji corresponding to the text; and
display, on at least a portion of the display, a first message in which the at least one obtained first recommended emoji is disposed at the outline of a speech bubble comprising the text.

2. The electronic device of claim 1, wherein the instructions cause the electronic device to:
determine the number of emojis, based on a speech bubble width according to the number of characters of the text; and
additionally transfer the determined number of emojis as an input value to the artificial intelligence engine to obtain, from the artificial intelligence engine, first recommended emojis, the number of which ranges from at least one up to the determined number of emojis.

3. The electronic device of claim 1, wherein the instructions cause the electronic device to:
display a first user interface (UI) screen comprising the message input window and a chat window on the display;
display a speech bubble decoration window on at least a portion of the first UI screen, based on receiving the text in the message input window; and
display the first message and a message transmission item in the message decoration window.

4. The electronic device of claim 3, further comprising a communication circuit,
wherein the instructions cause the electronic device to, based on an input for selecting the message transmission item, transmit the text, which includes speech bubble decoration data with the at least one first recommended emoji disposed at the outline of the speech bubble, to a counterpart electronic device via the communication circuit, and display the first message in the chat window.

5. The electronic device of claim 3, wherein the artificial intelligence engine comprises an emoji recommendation engine based on generative artificial intelligence.

6. The electronic device of claim 5, wherein the instructions cause the electronic device to:
extract a neologism keyword from an input sentence corresponding to the text, convert the neologism keyword to an alternative word, and delete at least one of profanity and a specific type of word in the input sentence to obtain filtered text; and
transfer a first reference value for determining appropriateness of an object emoji, a second reference value for determining appropriateness of an emotion emoji, and the filtered text as an input value to the artificial intelligence engine, and
wherein the neologism keyword, the alternative word, the profanity, and the specific type of word are preconfigured.

7. The electronic device of claim 6, wherein the instructions cause the electronic device to, as an operation of obtaining the at least one first recommended emoji:
obtain at least one first emoji from the artificial intelligence engine as an output value;
obtain at least one second emoji corresponding to the neologism keyword extracted from the input sentence corresponding to the text; and
obtain the at least one first recommended emoji by combining the first emoji and the second emoji.

8. The electronic device of claim 6, wherein the instructions cause the electronic device to, as an operation of displaying the first message on the at least portion of the display:
based on a score of the at least one first recommended emoji, determine a decoration pattern for arranging an emoji at the outline of the speech bubble; and
display the at least one first recommended emoji at the outline of the speech bubble, based on the number of emojis, an emoji text size, emoji arrangement, and an emoji position defined in the determined decoration pattern.

9. The electronic device of claim 6, wherein the instructions cause the electronic device to:
further display a refresh item in the message decoration window,
in response to a user input for selecting the refresh item, change the first reference value and the second reference value and then drive the artificial intelligence engine to obtain at least one second recommended emoji; and
display a first message in which the first recommended emoji is replaced with the second recommended emoji at the outline of the speech bubble comprising the text.

10. A method for providing a speech bubble function of an electronic device, the method comprising:
receiving text input into a message input window;
transferring the input text as an input value to an artificial intelligence engine to obtain, from the artificial intelligence engine, at least one first recommended emoji corresponding to the text; and
displaying, on at least a portion of a display, a first message in which the at least one obtained first recommended emoji is disposed at the outline of a speech bubble comprising the text.

11. The method of claim 9, further comprising determining the number of emojis, based on a speech bubble width according to the number of characters of the text,
wherein the obtaining of the at least one first recommended emoji corresponding to the text comprises additionally transferring the determined number of emojis as an input value to the artificial intelligence engine to obtain, from the artificial intelligence engine, first recommended emojis, the number of which ranges from at least one up to the determined number of emojis.

12. The method of claim 11, further comprising displaying a first user interface (UI) screen comprising the message input window and a chat window on the display,
wherein the displaying of the first message on the at least portion of the display comprises displaying a speech bubble decoration window on at least a portion of the first UI screen, based on receiving the text in the message input window, and displaying the first message and a message transmission item in the speech bubble decoration window.

13. The method of claim 11, wherein the displaying of the first message and the message transmission item further comprises:
based on an input for selecting the message transmission item, transmitting the text, which includes speech bubble decoration data with the at least one first recommended emoji disposed at the outline of the speech bubble, to a counterpart electronic device via a communication circuit; and
displaying the first message in the chat window.

14. The method of claim 13, wherein the displaying of the first message on the at least portion of the display further comprises:
based on a score of the at least one first recommended emoji, determining a decoration pattern for arranging an emoji at the outline of the speech bubble; and
displaying the at least one first recommended emoji at the outline of the speech bubble, based on the number of emojis, an emoji text size, emoji arrangement, and an emoji position defined in the determined decoration pattern.

15. A computer-readable recording medium storing a computer program for executing a method for providing a message bubble function of an electronic device, the method comprising:
receiving text input into a message input window;
transferring the input text as an input value to an artificial intelligence engine to obtain, from the artificial intelligence engine, at least one first recommended emoji corresponding to the text; and
displaying, on at least a portion of a display, a first message in which the at least one obtained first recommended emoji at the outline of a speech bubble comprising the text.
